(19) Europäisches Patentamt

European Patent Office

Office européen des brevets

(11) **EP 0 633 989 B1**

(12) **FASCICULE DE BREVET EUROPEEN**

(45) Date de publication et mention
de la délivrance du brevet:
**18.09.1996 Bulletin 1996/38**

(51) Int Cl.6: **F16F 15/02**, B64C 27/00,
F16C 7/04, F16F 9/10

(21) Numéro de dépôt: **93907921.6**

(22) Date de dépôt: **02.04.1993**

(86) Numéro de dépôt international:
**PCT/FR93/00332**

(87) Numéro de publication internationale:
**WO 93/21460 (28.10.1993 Gazette 1993/26)**

(54) **DISPOSITIF DE LIAISON MECANIQUE RIGIDE A COUPURE DE FREQUENCE**

FREQUENZABHÄNGIGE STARRE MECHANISCHE KUPPLUNGSVORRICHTUNG

FREQUENCY CUTTING RIGID MECHANICAL LINKAGE DEVICE

(84) Etats contractants désignés:
**DE FR GB IT**

(30) Priorité: **10.04.1992 FR 9204405**

(43) Date de publication de la demande:
**18.01.1995 Bulletin 1995/03**

(73) Titulaire: **BERTIN & CIE**
**F-78373 Plaisir Cédex (FR)**

(72) Inventeurs:
• **GUILLOUD, Jean-Claude**
**F-78370 Plaisir (FR)**
• **LEPRETRE, Marc**
**F-92270 Bois-Colombes (FR)**

• **TROUCHET, Daniel**
**F-75015 Paris (FR)**
• **LAPAUTRE, Michel**
**F-92410 Ville-d'Avray (FR)**

(74) Mandataire: **Ramey, Daniel**
**Cabinet Ores**
**6 Avenue de Messine**
**75008 Paris (FR)**

(56) Documents cités:
**EP-A- 0 335 786        EP-A- 0 501 658**
**WO-A-89/05930        FR-A- 569 663**
**US-A- 4 872 649**

## Description

L'invention concerne un dispositif de liaison mécanique rigide entre deux structures.

Les dispositifs de liaison mécanique utilisés notamment pour la suspension ou le support d'une structure par une autre structure, comprennent en général un élément de liaison à raideur plus ou moins élevée, tel par exemple qu'un ressort ou un bloc de matière élastomère, associé à un moyen du type "dash pot" pour l'amortissement des mouvements entre les deux structures et le filtrage des vibrations. De tels dispositifs sont utilisés dans l'industrie automobile, pour la suspension de la caisse et du groupe motopropulseur d'un véhicule automobile. Ils se caractérisent essentiellement en ce qu'ils sont des dissipateurs d'énergie et des transmetteurs d'effort, les efforts transmis étant proportionnels aux vitesses vibratoires.

On connaît également des dispositifs hydrauliques de filtrage de vibrations basse fréquence, utilisés en particulier dans l'industrie automobile et comprenant deux chambres à paroi élastiquement déformable qui sont remplies de liquide et reliées entre elles par un passage étroit, la mise en résonance de la masse de liquide refoulé dans le passage étroit permettant une atténuation des vibrations à une basse fréquence déterminée. La faible valeur de la fréquence atténuée par ces dispositifs est liée à la valeur relativement faible de la raideur du ou des blocs de matière élastomère dans lesquels sont formées les chambres précitées. Cette faible raideur a toutefois pour conséquence des déformations des parois des chambres, qui se traduisent par une transmission partielle d'efforts à la fréquence à atténuer.

Lorsqu'il est nécessaire au contraire d'utiliser des liaisons mécaniques à raideur élevée ou très élevée, comme c'est par exemple le cas pour la suspension à un fuselage d'hélicoptère d'une boîte de transmission principale montée entre une turbine et un rotor, les dispositifs connus ne sont pas applicables et on a proposé d'équilibrer des forces vibratoires générées par le rotor et transmises par la boîte de transmission en leur opposant des forces d'inertie de valeur égale et de sens opposé produites par des masses reliées par des leviers aux bras de suspension de la boîte de transmission principale. Les leviers fournissent une amplification permettant de réduire le poids des masses embarquées. Malgré cela, ce poids reste important et le filtrage de la basse fréquence d'excitation générée par le rotor n'est pas assuré de façon suffisante.

On connaît aussi des systèmes actifs conforme au préambule de la revendication 1, par exemple par le document WO-A-89/05930, qui décrit un isolateur comprenant un ressort et un amortisseur agencés en parallèle pour former un système de suspension, l'amortisseur comprenant dans un cylindre deux chambres opposées reliées par un orifice de faible dimension. Un moyen actif comprenant un actionneur et une pompe est associé à l'amortisseur pour générer une pression différentielle de part et d'autre de l'orifice qui s'oppose aux vibrations appliquées à l'isolateur.

L'invention a notamment pour but d'éviter les inconvénients précités de la technique antérieure.

Elle a pour objet un dispositif permettant d'assurer une liaison mécanique rigide entre deux structures, tout en annulant ou au moins en réduisant dans une très large mesure la transmission d'une basse fréquence de valeur donnée, sans absorber d'énergie.

Elle a également pour objet un dispositif de ce type, qui soit fiable, léger et peu encombrant.

Elle propose, à cet effet, un dispositif de liaison mécanique rigide à coupure de fréquence entre deux structures, ce dispositif comprenant un élément de transmission d'efforts statiques entre les deux structures et un ensemble cylindre-piston étanche dont le piston est solidaire d'une structure et dont le cylindre est solidaire de l'autre structure, caractérisé en ce que l'élément de transmission d'efforts statiques est un tirant à raideur élevée, parallèle à l'axe de l'ensemble cylindre-piston et solidaire desdites structures à ses extrémités, et en ce que le dispositif comprend des moyens pour générer une inertie s'opposant instantanément au déplacement du piston dans le cylindre en réponse à une accélération impulsionnelle ou quasi-impulsionnelle, ces moyens comprenant au moins un conduit de section faible par rapport à celle du piston et reliant entre elles les deux chambres formées dans le cylindre de part et d'autre du piston, et un liquide sensiblement non visqueux remplissant entièrement le cylindre et le conduit, ces derniers étant sensiblement rigides et indéformables sous l'effet des variations de pression, de sorte que la transmission à l'une des structures d'une accélération impulsionnelle ou quasi-impulsionnelle appliquée à l'autre structure et provoquant un déplacement dans un sens du piston dans le cylindre, est contrariée par l'inertie du liquide déplacé dans l'autre sens dans le conduit, cette inertie considérée au niveau du piston étant égale à la masse du liquide contenu dans le conduit, amplifiée par le carré du rapport de la section utile du piston et de la section interne du conduit.

Le dispositif selon l'invention permet donc d'équilibrer au moins partiellement une force impulsionnelle ou quasi-impulsionnelle appliquée au cylindre ou au piston, par une force d'inertie de valeur sensiblement égale et de sens opposé, produite par le déplacement à accélération élevée du liquide contenu dans le conduit reliant les deux chambres du cylindre. L'inertie résultante sur le piston est amplifiée par le rapport du carré des sections du piston et du conduit, c'est-à-dire par le rapport à la puissance 4 des dimensions transversales du piston et du conduit. Lorsque ce rapport est de l'ordre de 10, le facteur d'amplification de l'inertie est de l'ordre de $10^4$. On peut ainsi produire une force d'inertie de valeur élevée en utilisant une faible masse de liquide.

Pour éviter les pertes d'énergie par frottement, il est important que le liquide remplissant le cylindre et le conduit du dispositif selon l'invention ait une viscosité aussi faible que possible. Les très faibles pertes par frottement qui résultent de l'utilisation d'un liquide très peu visqueux différencient de façon particulièrement remarquable le dispositif selon l'invention des systèmes du type "dash pot" connus dans la technique antérieure, qui sont essentiellement des dissipateurs ou des absorbeurs d'énergie.

Il est important également que le cylindre et le conduit contenant le liquide à très faible viscosité soient sensiblement indéformables sous l'effet des variations de pression, car toute déformation du cylindre ou du conduit se traduit par une dégradation de l'amplification d'inertie mentionnée plus haut et par une transmission de force.

Selon une autre caractéristique les dimensions du conduit et le rapport des sections du piston et du conduit sont déterminés en fonction de la raideur du tirant et d'une fréquence d'excitation, afin d'annuler sensiblement ou au moins de réduire très largement la transmission de cette fréquence d'excitation.

Le dispositif selon l'invention permet notamment de bloquer une basse fréquence d'excitation générée par ou appliquée à l'une des structures et qui serait autrement transmise à l'autre structure. Par exemple, dans le cas de la suspension d'une boîte de transmission principale dans un hélicoptère, le dispositif selon l'invention permet de bloquer une basse fréquence produite par la rotation des pales du rotor en régime établi, cette basse fréquence étant comprise entre 15 et 30 Hz environ, selon le type d'hélicoptère.

Les dispositifs selon l'invention peuvent également être montés en série, soit pour réaliser un filtre de fréquences en peigne, soit pour réaliser un filtre passe-bas.

Avantageusement, la pression statique du liquide qui remplit le cylindre et le conduit précité est supérieure à au moins la moitié de l'amplitude totale des variations de pression du liquide, pour éviter les phénomènes de cavitation. On garantit ainsi une pression de liquide toujours supérieure à la pression de saturation du liquide.

Dans un mode de réalisation préféré de l'invention:

le tirant précité traverse axialement le piston et le cylindre, qui sont de forme annulaire et qui entourent axialement le tirant,
le tirant est un tube cylindrique,
le conduit est enroulé en hélice autour du cylindre et comprend par exemple une rainure hélicoïdale formée dans la surface extérieure du cylindre et débouchant à ses extrémités à l'intérieur du cylindre, et une enveloppe cylindrique fixée au cylindre et appliquée à étanchéité sur la surface extérieure de celui-ci.

Un tel dispositif peut être réalisé avec un poids total d'environ 7 kg, pour former l'un des quatre bras de suspension d'une boîte de transmission principale dans un hélicoptère et permet de développer, par oscillation d'une masse de liquide de l'ordre du kg, une force d'inertie équivalente à celle d'une masse de 700 kg permettant d'équilibrer sensiblement les vibrations produites par la rotation des pales du rotor en régime établi et transmises au fuselage par la boite de transmission principale, les accélérations résiduelles au niveau du fuselage étant de l'ordre de 0,01 à 0,02 g, ce qui correspond à une amélioration par un facteur 10 des performances des systèmes connus utilisés dans le même but.

L'invention sera mieux comprise et d'autres caractéristiques, détails et avantages de celle-ci apparaitront plus clairement à la lecture de la description qui suit, faite à titre d'exemple en référence aux dessins annexés dans lesquels:

la figure 1 illustre schématiquement le principe sur lequel est basé l'invention;
la figure 2 est une vue schématique en coupe axiale d'un bras de suspension selon l'invention;
La figure 3 représente schématiquement le montage en série de plusieurs dispositifs selon l'invention, formant un filtre passe-bas.

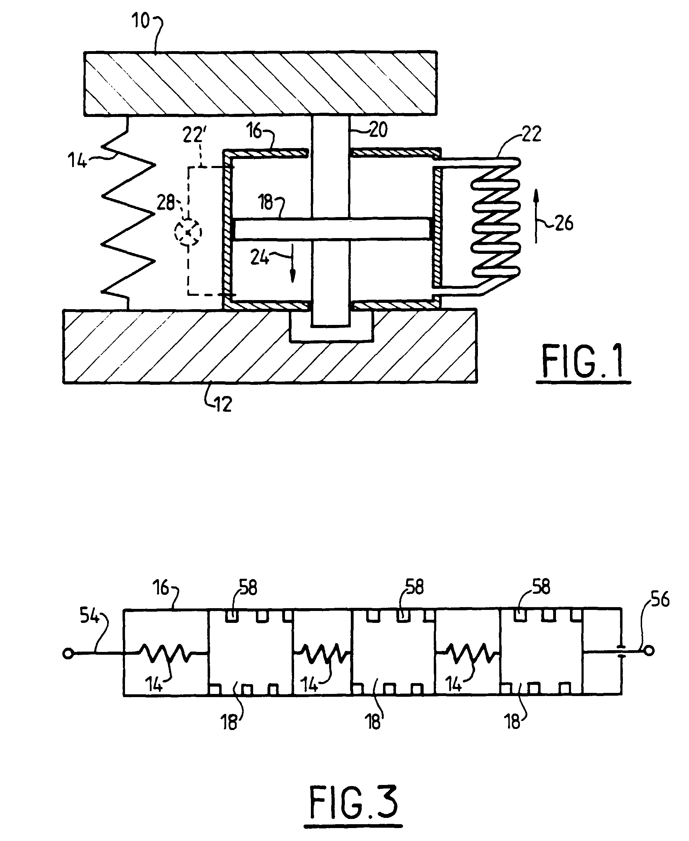

En figure 1, les références 10 et 12 désignent respectivement deux structures destinées à être reliées rigidement l'une à l'autre par le dispositif selon l'invention qui comprend un élément 14 de transmission d'efforts statiques, schématisé sous la forme d'un ressort à raideur très élevée et dont les deux extrémités sont fixées aux structures 10 et 12, ainsi qu'un ensemble cylindre 16 - piston 18 en parallèle sur l'élément 14, le cylindre 16 étant par exemple solidaire de la structure 12 tandis que le piston 18 est fixé à la structure 10 par une tige de piston 20 qui traverse à étanchéité le cylindre 16 à ses deux extrémités, le piston 18 étant lui-même déplaçable de façon sensiblement étanche à l'intérieur du cylindre 16. Un conduit 22 ayant une section interne faible par rapport à la surface utile du piston 18, relie entre elles les deux chambres formées de part et d'autre du piston 18 dans le cylindre. Le cylindre 16 et le conduit 22 sont rigides et indéformables et sont remplis d'un liquide à viscosité très faible.

Lorsqu'une accélération impulsionnelle ou quasi-impulsionnelle ayant une composante verticale sur le dessin de la figure 1 est appliquée à la structure 10, elle provoque un allongement ou une compression très limité de l'élément rigide 14 et un déplacement d'amplitude et de sens correspondants du piston 18 à l'intérieur du cylindre 16. Le déplacement du piston 18 dans le cylindre 16, par exemple dans le sens indiqué par la flèche 24, sur une amplitude qui est par exemple de l'ordre du millimètre ou moins, provoque dans le conduit 22 un déplacement en sens inverse, comme indiqué par la flèche 26, du liquide à viscosité très faible qui remplit complètement le cylindre 16 et le conduit 22. La masse du liquide contenu dans le conduit 22 et déplacé par le mouvement du piston 18 dans le cylindre 16, a une inertie, considérée au niveau du piston 18, qui est égale à la masse du liquide contenu dans le conduit 22 multipliée par le carré du rapport de la section utile du piston 18 et de la section interne du conduit 22, c'est-à-dire multiplié par le rapport à la puissance 4 des dimensions transversales correspondantes du piston 18 et du conduit 22, comme cela résulte du calcul ci-dessous:

Soient Fe la force déplaçant le piston 18 dans le cylindre 16 et Γe l'accélération du piston 18, S la surface utile du piston, P1 et P2 les pressions du liquide au-dessus et au-dessous du piston 18, et M la masse de l'équipage mobile. On a alors :

$$Fe = (P1 - P2) S + M \Gamma e$$

On a d'autre part, dans le conduit 22 :

$$P1 - P2 = \rho \, L \, \Gamma f$$

$\rho$ étant la masse volumique du liquide, L la longueur du conduit 22 et Γf l'accélération du liquide dans le conduit 22.

En raison de la conservation des débits dans le cylindre 16 et dans le conduit 22,

$$\Gamma_f = (S/s) \, \Gamma e$$

s étant la section interne du conduit 22.
On en tire :

$$Fe = \rho \, L \, (S/s) \, \Gamma e \times S + M \, \Gamma e = [ \, \rho \, L \, s \, (S/s)^2 + M \, ] \, \Gamma e$$

ou :

$$F = (Mi + M) \, \Gamma e$$

avec

$$Mi = m \, (S/s)^2$$

Mi étant la masse inerte ajoutée au piston, $m = \rho \, L \, s$ étant la masse du liquide contenu dans le tube 22.

On voit qu'on augmente ainsi l'inertie du piston 18 d'une quantité Mi qui est égale à la masse m du liquide contenu dans le tube 22 multipliée par le carré du rapport S/s, ce rapport étant égal au rapport de la section utile du piston 18 et de la section interne du conduit 22.

Cette masse d'inertie ajoutée au piston peut être très importante, bien qu'il ne s'agisse pas d'une masse pesante. Lorsque la masse du liquide contenu dans le tube 22 est de 1,5 kg et que le rapport S/s est égal à 30, la masse d'inertie ajoutée Mi est de 1350 kg.

Dans l'exemple représenté, le conduit 22 a une longueur nettement supérieure à celle du cylindre 16, ce qui permet d'augmenter la masse m du liquide contenu dans ce conduit sans augmenter sa section s et qui favorise donc l'effet recherché d'amplification d'inertie.

Si l'on considère maintenant une force vibratoire appliquée à la structure 10, il existe une fréquence pour laquelle le dispositif selon l'invention ne transmet sensiblement aucune force dynamique à la structure 12 (lorsqu'on considère un liquide parfait sans viscosité et donc sans frottement).

Soient Fe = Acoswt la force vibratoire appliquée à la structure 10, A son amplitude et w sa pulsation, et K la raideur de l'élément 14.

La force vibratoire transmise à la structure 12 est alors donnée par $K A - Mi \, w^2 A$.

Si la pulsation w est égale à $(K/Mi)^{1/2}$, la force vibratoire transmise à la structure 12 est nulle (si l'on néglige les pertes par frottements dans le liquide, qui sont très faibles en raison de la très faible viscosité du liquide). En régime harmonique, les vitesses de déplacement dans le dispositif sont en quadrature de phase avec les forces appliquées, de sorte que la puissance dissipée dans le dispositif est nulle (si l'on néglige les petites pertes par frottement fluide).

On voit donc que l'on peut équilibrer instantanément la force vibratoire transmise à la structure 12 par l'élément rigide 14, au moyen d'une force d'inertie de valeur égale et de sens opposé, résultant de l'accélération d'une très faible masse de liquide dans le conduit 22, pour une fréquence d'excitation donnée.

Lorsqu'on connaît cette fréquence, il est simple de déterminer les dimensions du conduit 22 qui permettent d'obtenir ce résultat à partir de la raideur K de l'élément 14 et du rapport de section S/s.

On peut bien entendu prévoir plusieurs conduits 22 en parallèle sur le cylindre 16, comme représenté par exemple en 22' en figure 1, les conduits 22, 22' ayant des dimensions différentes, et équiper chaque conduit d'une électrovanne commandée 28. Ainsi, on peut avec le dispositif selon l'invention filtrer successivement plusieurs fréquences d'excitation, à chaque fois en ouvrant l'électrovanne d'un des conduits 22, 22' et en fermant les électrovannes des autres conduits.

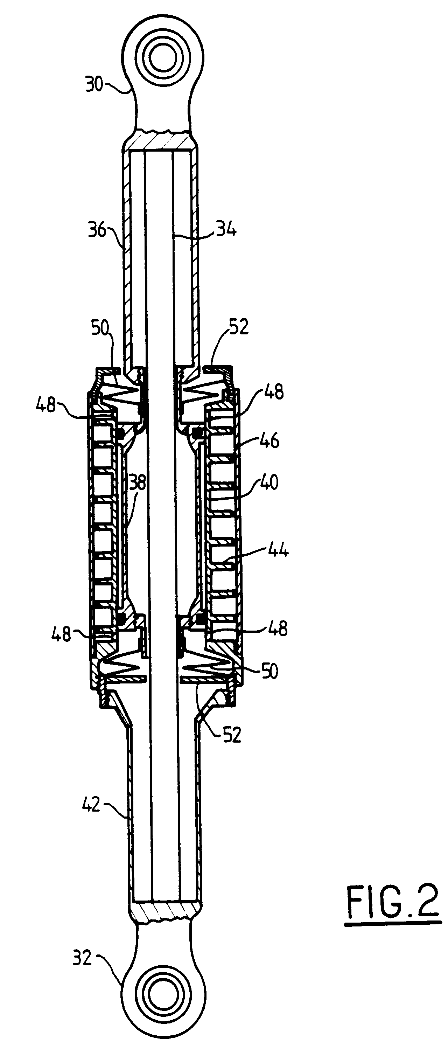

On a représenté en figure 2 un mode de réalisation pratique d'un dispositif selon l'invention.

Le dispositif de la figure 2 constitue un bras de suspension destiné à être fixé par ses extrémités 30 et 32 à deux structures telles que la boîte de transmission principale d'un hélicoptère et le fuselage de l'hélicoptère, par exemple. Les deux extrémités de fixation de ce bras de suspension sont reliées rigidement entre elles par un tirant axial 34 formé d'un tube creux en acier, ayant une longueur d'environ 80 cm, un diamètre de 30 mm, une épaisseur de paroi d'un millimètre et une raideur d'environ $2,5.10^7 N/m$.

Un manchon cylindrique 36 entoure avec jeu la partie supérieure du tube 34 en étant fixé à la pièce 30 à son extrémité supérieure et en supportant à son extrémité inférieure un piston cylindrique tubulaire 38 qui entoure avec jeu la partie médiane du tube 34. Ce piston 38 est monté coulissant à étanchéité dans un corps cylindrique 40 dont l'extrémité inférieure est reliée par un manchon tubulaire 42 à la pièce inférieure de fixation 32 du dispositif. La surface périphérique extérieure du corps cylindrique 40 comporte une rainure hélicoïdale 44 sur sensiblement toute sa longueur, et sur laquelle est appliquée à étanchéité une enveloppe cylindrique 46 solidaire du corps 40. Cette rainure hélicoïdale communique avec l'intérieur du corps cylindrique 40 par des orifices 48 qui sont formés aux extrémités axiales de ce corps, de part et d'autre du piston tubulaire 38. Les extrémités axiales du corps cylindrique 40 sont par ailleurs reliées à étanchéité par des soufflets métalliques 50 aux extrémités axiales correspondantes du piston tubulaire 38. L'espace qui est défini par les soufflets métalliques 50, la surface interne du corps cylindrique 40 et les extrémités du piston 38 est rempli d'un liquide ayant une viscosité aussi faible que possible (par exemple de l'ordre de $10^{-6}$ MKSA) qui remplit également la rainure hélicoïdale 44.

On comprend que cette rainure hélicoïdale 44 remplie de liquide est équivalente au conduit 22 de la figure 1. La longueur de la rainure hélicoïdale 44 est par exemple de 3,7m, et sa section de passage de liquide de 4 $cm^2$. La surface efficace S du piston tubulaire 38 est par exemple de 95 $cm^2$, ce qui donne un rapport S/s égal à 23,75. Pour une masse de liquide contenu dans la rainure hélicoïdale 44 égale à 1,5 kg, la masse d'inertie ajoutée est de 704 kg. Le poids total de ce bras de suspension est d'environ 7,5 kg.

La pression statique du liquide dans ce bras de suspension est par exemple de l'ordre de 15 bars et est supportée par les soufflets métalliques 50 sans problème.

Si l'on souhaite utiliser une pression statique de liquide plus élevée (ce qui permet de diminuer l'encombrement transversal du dispositif en gardant la même masse d'inertie ajoutée, la diminution de la section S étant compensée par l'augmentation de la longueur L), on peut prévoir aux extrémités du corps cylindrique 40 des butées transversales 52 sur lesquelles s'appuient les soufflets 50, ces butées 52 étant fixées sur le corps cylindrique 40 et coulissant par rapport au manchon 36, au piston 38 et/ou au tirant 34.

Le liquide peut être amené sous pression dans le corps cylindrique ou dans sa rainure hélicoïdale, ou bien il peut être pressurisé par l'intermédiaire des soufflets 50 quand on remplit le volume interne du manchon 36, du piston 38 et du manchon 42 d'un gaz sous pression (par exemple d'azote à une pression de quelques dizaines de bars).

Dans ce cas, le bras de suspension constitue un élément scellé étanche rempli de gaz et de liquide à pression élevée.

En figure 3, on a représenté schématiquement le montage en série de plusieurs dispositifs selon l'invention, constituant un filtre passe-bas. Le système comprend, pour l'essentiel, n pistons cylindriques 18 montés coulissants en série dans un cylindre 16, n tirants 14 de raideur K qui relient l'un à l'autre les pistons 18 ainsi qu'un piston 18 d'extrémité à une extrémité du cylindre 16 munie d'une pièce 54 de fixation à une structure, l'autre extrémité du cylindre 16 étant traversée à étanchéité par une tige 56 de fixation à une autre structure, cette tige 56 étant solidaire de l'autre piston 18 d'extrémité. Chaque piston 18 comporte un conduit étroit de passage de liquide, tel qu'une rainure hélicoïdale 58 formée dans sa surface périphérique. Un liquide sous pression à très faible viscosité remplit complètement le cylindre 16 et les rainures hélicoïdales 58.

Le système se comporte comme un filtre passe-bas à l'égard des forces vibratoires et présente une fréquence de coupure égale à $(1/2 \pi) [4 K/(M + Mi)]^{1/2}$, K étant la raideur d'un tirant 14, M la masse d'un piston 18 et Mi la masse inerte ajoutée à un piston 18 et telle que définie dans la formule citée plus haut, de sorte qu'aucune force vibratoire de fréquence supérieure ou égale à la fréquence de coupure précitée n'est alors transmise par le système d'une structure à l'autre.

En variante, on peut également monter bout à bout plusieurs dispositifs tels que celui de la figure 2, pour former un filtre de fréquences en peigne, lorsque chaque dispositif est accordé sur une basse fréquence différente, ce qui se révèle intéressant dans certaines applications.

On notera par ailleurs que l'invention s'applique également, de façon immédiate pour l'homme du métier, à l'atténuation des mouvements vibratoires de rotation ou de torsion.

## Revendications

1. Dispositif de liaison mécanique rigide à coupure de fréquence entre deux structures, ce dispositif comprenant un élément de transmission d'efforts statiques entre les structures (10, 12) et un ensemble cylindre-piston étanche dont le piston (18) est solidaire d'une structure et dont le cylindre (16) est solidaire de l'autre structure (12), caractérisé en ce que l'élément de transmission d'efforts statiques est un tirant (14) à raideur élevée, parallèle à l'axe de l'ensemble cylindre-piston et solidaire des structures (10, 12) à ses extrémités et en ce que le dispositif comprend des moyens pour générer une inertie s'opposant instantanément au déplacement du piston dans le cylindre en réponse à une accélération impulsionnelle ou quasi-impulsionnelle, ces moyens comprenant au moins un conduit (22) de section faible par rapport à celle du piston (18) et reliant entre elles les deux chambres formées dans le cylindre (16) de part et d'autre du piston, et un liquide sensiblement non visqueux remplissant entièrement le cylindre (16) et le conduit (22), ces derniers étant sensiblement rigides et indéformables sous l'effet des variations de pression, de sorte que la transmission à l'une des structures d'une accélération impulsionnelle ou quasi-impulsionnelle appliquée à l'autre structure et provoquant un déplacement dans un sens du piston (18) dans le cylindre (16) est contrariée par l'inertie du liquide déplacé dans l'autre sens dans le conduit (22), cette inertie considérée au niveau du piston (18) étant égale à la masse du liquide contenu dans le conduit (22), amplifiée par le carré du rapport de la section utile du piston (18) et de la section interne du conduit (22).

2. Dispositif selon la revendication 1, caractérisé en ce que les dimensions du conduit (22) et le rapport des sections du piston (18) et du conduit (22) sont déterminés en fonction de la raideur du tirant (14) et d'une fréquence d'excitation afin d'annuler sensiblement ou au moins de réduire très largement la transmission de cette fréquence d'excitation.

3. Dispositif selon la revendication 1 ou 2, caractérisé en ce que la pression statique du liquide dans le cylindre (16) et le conduit (22) précités est supérieure à au moins la moitié de l'amplitude totale de la variation de pression, pour éviter les phénomènes de cavitation dans le liquide.

4. Dispositif selon l'une des revendications précédentes, caractérisé en ce qu'il comprend au moins deux conduits (22, 22') de dimensions différentes reliant en parallèle les deux chambres formées de part et d'autre du piston dans le cylindre, et des moyens commandés, tels par exemple que des électrovannes (28), pour obturer l'un ou l'autre de ces conduits.

5. Dispositif selon l'une des revendications précédentes, caractérisé en ce que le tirant (34) précité traverse axialement le piston (38) et le cylindre (40) précités.

6. Dispositif selon la revendication 5, caractérisé en ce que le piston (38) et le cylindre (40) sont de forme annulaire et entourent axialement le tirant (34).

7. Dispositif selon l'une des revendications précédentes, caractérisé en ce que le tirant (34) est un tube cylindrique.

8. Dispositif selon l'une des revendications précédentes, caractérisé en ce que le conduit précité (44) est enroulé en hélice autour du cylindre.

9. Dispositif selon la revendication 8, caractérisé en ce que le conduit précité comprend une rainure hélicoïdale (44) formée dans la surface extérieure du cylindre (40) et débouchant à ses extrémités à l'intérieur du cylindre, et une enveloppe cylindrique (46) fixée au cylindre et appliquée à étanchéité sur la paroi extérieure de celui-ci.

10. Dispositif selon l'une des revendications précédentes, caractérisé en ce qu'il comprend plusieurs pistons (18) montés coulissants en série dans un même cylindre (16) et comprenant chacun un conduit (58) de faible section dont les extrémités débouchent dans le cylindre de part et d'autre du piston, plusieurs tirants (14) reliant les pistons (18) entre eux et reliant un piston d'extrémité (18) à une extrémité du cylindre (16) comportant un moyen de fixation à l'une des structures, un moyen de fixation traversant à étanchéité l'autre extrémité du cylindre (16) pour relier l'autre piston d'extrémité (18) à l'autre structure, et un liquide sensiblement non visqueux remplissant le cylindre (16) et les conduits (58) des pistons (18), ce dispositif constituant un filtre passe-bas à l'égard des forces vibratoires appliquées à l'une des structures.

11. Dispositif selon l'une des revendications 1 à 9, caractérisé en ce qu'il comprend plusieurs dispositifs précités montés en série entre les structures pour constituer un filtre de fréquences en peigne, chaque dispositif étant accordé sur une basse fréquence différente de celles des autres dispositifs.

**Patentansprüche**

1. Vorrichtung für die frequenzbegrenzende starre mechanische Verbindung zwischen zwei Strukturen, wobei die Vorrichtung ein Element zur Übertragung von statischen Beanspruchungen zwischen den Strukturen (10, 12) und eine dichte Zylinder/ Kolben-Einheit aufweist, deren Kolben (18) einstükkig mit der einen Struktur ausgebildet ist und deren Zylinder (16) einstückig mit der anderen Struktur (12) ausgebildet ist, **dadurch gekennzeichnet, daß** das Element zur Übertragung von statischen Beanspruchungen ein Zugelement (14) mit hoher Steifigkeit ist, welches parallel zur Achse der Zylinder/Kolben-Einheit und an seinen Enden einstückig mit den Strukturen (10, 12) ausgebildet ist, sowie dadurch, daß die Vorrichtung Einrichtungen zum Erzeugen einer Trägheit aufweist, welche der Verschiebung des Kolbens im Zylinder als Reaktion auf eine stoßartige oder quasi-stoßartige Beschleunigung unverzüglich entgegenwirkt, wobei diese Einrichtungen zumindest aufweisen: eine Leitung (22), deren Querschnitt kleiner als der Querschnitt des Kolbens (18) ist und welche die zwei jeweils auf einer Seite des Kolbens im Zylinder (18) gebildeten Kammern miteinander verbindet; sowie eine im wesentlichen nicht-viskose Flüssigkeit, welche den Zylinder (16) und die Leitung (22) zur Gänze ausfüllt, wobei diese letzteren im wesentlichen unelastisch und unter der Einwirkung der Druckänderungen nicht verformbar sind, so daß der Übertragung auf die eine der Strukturen einer auf die andere der Strukturen aufgebrachten stoßartigen oder quasistoßartigen Beschleunigung, welche eine Verschiebung des Kolbens (18) im Zylinder (16) in einer Richtung hervorruft, von der Trägheit der in der anderen Richtung in der Leitung (22) verdrängten Flüssigkeit entgegengewirkt wird, wobei diese am Kolben (18) betrachtete Trägheit gleich der Masse der in der Leitung (22) enthaltenen Flüssigkeit ist und mit dem Quadrat des Verhältnisses zwischen dem Arbeitsquerschnitt des Kolbens (18) und dem Innenquerschnitt der Leitung (22) zunimmt.

2. Vorrichtung nach Anspruch 1, dadurch gekennzeichnet, daß die Abmessungen der Leitung (22) und das Verhältnis zwischen dem Querschnitt des Kolbens (18) und dem Querschnitt der Leitung (22) in Abhängigkeit von der Steifigkeit des Zugelementes (14) sowie von einer Erregungsfrequenz bestimmt sind, um die Übertragung dieser Erregungsfrequenz im wesentlichen aufzuheben oder zumindest sehr weitgehend zu reduzieren.

3. Vorrichtung nach Anspruch 1 oder 2, dadurch gekennzeichnet, daß der statische Druck der im Zylinder (16) und in der Leitung (22) befindlichen Flüssigkeit größer als mindestens die Hälfte der Gesamtamplitude der Druckänderung ist, um Kavitationserscheinungen in der Flüssigkeit zu vermeiden.

4. Vorrichtung nach einem der vorhergehenden Ansprüche, dadurch gekennzeichnet, daß sie mindestens zwei Leitungen (22, 22') mit unterschiedlichen Abmessungen aufweist, welche parallel zueinander die zwei jeweils auf einer Seite des Kolbens im Zylinder gebildeten Kammern verbinden, sowie Steuereinrichtungen wie beispielsweise Elektroventile (28) zum Verschließen der einen oder der anderen Leitung.

5. Vorrichtung nach einem der vorhergehenden Ansprüche, dadurch gekennzeichnet, daß sich das Zugelement (34) in Axialrichtung durch den Kolben (38) und den Zylinder (40) erstreckt.

6. Vorrichtung nach Anspruch 5, dadurch gekennzeichnet, daß der Kolben (38) und der Zylinder (40) ringförmig ausgebildet sind und das Zugelement (34) axial umgeben.

7. Vorrichtung nach einem der vorhergehenden Ansprüche, dadurch gekennzeichnet, daß das Zugelement (34) eine zylindrische Röhre ist.

8. Vorrichtung nach einem der vorhergehenden Ansprüche, dadurch gekennzeichnet, daß die Leitung (44) wendelförmig um den Zylinder herum angeordnet ist.

9. Vorrichtung nach Anspruch 8, dadurch gekennzeichnet, daß die Leitung eine in der Außenfläche des Zylinders (40) ausgebildete und an ihren Enden zum Inneren des Zylinders hin offene wendelförmige Rille (44) sowie einen am Zylinder befestigten und dichtend auf dessen Außenwandung aufgebrachten zylindrischen Mantel (46) aufweist.

10. Vorrichtung nach einem der vorhergehenden Ansprüche, dadurch gekennzeichnet, daß sie aufweist: mehrere Kolben (18), welche gleitverschieblich in einem gleichen Zylinder (16) hintereinandergeschaltet sind und jeweils eine Leitung (58) mit geringem Durchmesser aufweisen, deren Enden jeweils auf einer Seite des Kolbens zum Inneren des Zylinders hin offen sind; mehrere Zugelemente (14), welche die Kolben (18) untereinander verbinden und einen endseitig angeordneten Kolben (18) mit einem Ende desjenigen Zylinders (16) verbinden, welcher eine Einrichtung zur Befestigung an einer der Strukturen aufweist; eine Befestigungseinrichtung, welche sich abgedichtet durch das andere Ende des Zylinders (16) erstreckt, um den anderen endseitig angeordneten Zylinder (18) mit der anderen Struktur zu verbinden; sowie eine im wesentlichen nicht-viskose Flüssigkeit, welche den Zylinder (16) und die Leitungen (58) der Kolben (18) ausfüllt; wobei diese Vorrichtung ein Tiefpaßfilter in Bezug auf die auf eine der Strukturen einwirkenden Schwingungskräfte darstellt.

11. Vorrichtung nach einem der Ansprüche 1 bis 9, dadurch gekennzeichnet, daß sie mehrere der vorstehend bezeichneten Vorrichtungen in Reihe zwischen die Strukturen geschaltet aufweist, so daß sie ein Kamm-Frequenzfilter darstellt, wobei jede der Vorrichtungen auf eine andere tiefe Frequenz als die anderen Vorrichtungen abgestimmt ist.

**Claims**

1. A device for providing a rigid mechanical link with frequency cutoff between two structures, the device comprising a member for transmitting static forces between the two structures (10, 12) and a sealed cylinder-piston assembly, the piston (18) of which is secured to one structure and the cylinder (16) of which is secured to the other structure (12), the device being characterized in that the member for transmitting static forces is a tie-rod (14) of high stiffness, parallel to the axis of the cylinder-piston assembly, and the ends of the tie-rod are secured to the structures (10, 12), and in that the device comprises means for generating inertia instantaneously opposing the displacement of the piston in the cylinder in response to an impulsive or quasi-impulsive acceleration, these means comprising at least one duct (22) of small cross-section relative to that of the piston (18), the duct interconnecting the two chambers formed in the cylinder (16) on either side of the piston, and a substantially non-viscous liquid which completely fills the cylinder (16) and the duct (22), the cylinder and duct being substantially rigid and dimensionally stable under the effect of pressure variations, so that the transmission to one of the structures of an impulsive or quasi-impulsive acceleration applied to the other structure, which causes displacement of the piston (18) in the cylinder (16) in one direction, is opposed by the inertia of the liquid displaced in the opposite direction in the duct (22), this inertia as seen at the piston (18) being equal to the mass of the liquid contained in the duct (22), amplified by the square of the ratio of the working cross-sectional area of the piston (18) over the internal cross-section of the duct (22).

2. A device according to claim 1, characterized in that the dimensions of the duct (22) and the ratio of the cross-sectional areas of the piston (18) and of the duct (22) are determined as a function both of the stiffness of the tie-rod (14) and of an excitation frequency, so as to substantially cancel or at least very much reduce the transmission of that excitation frequency.

3. A device according to claim 1 or claim 2, characterized in that the static pressure of the liquid in the cylinder (16) and the aforementioned duct (22) is greater than at least half the total amplitude of the pressure variations, so as to avoid cavitation phenomena in the liquid.

4. A device according to any preceding claim, characterized in that it includes at least two ducts (22, 22') of different dimensions interconnecting in parallel the two chambers formed on either side of the piston in the cylinder, and controllable means, such as solenoid valves (28) for example, for closing one or other of the ducts.

5. A device according to any preceding claim, characterized in that the aforementioned tie-rod (34) passes axially through the aforementioned piston (38) and cylinder (40).

6. A device according to claim 5, characterized in that the piston (38) and cylinder (40) are annular in shape and surround the tie-rod (34) axially.

7. A device according to any preceding claim, characterized the tie-rod (34) is a cylindrical tube.

8. A device according to any preceding claim, characterized in that the aforementioned duct (44) is wound helically around the cylinder.

9. A device according to claim 8, characterized in that the aforementioned duct comprises a helical groove (44) formed in the outside surface of the cylinder (40) and opening at its ends to the inside of the cylinder, and a cylindrical envelope (46) secured to the cylinder and applied sealingly over the outside surface thereof.

10. A device according to any preceding claim, characterized in that it comprises a plurality of pistons (18) slidably mounted in series in the same cylinder (16), each piston including a duct (58) of small cross-section, the ends of which open out into the cylinder on either side of the piston, a plurality of tie-rods (14) connecting the pistons (18) together and connecting an end piston (18) to an end of the cylinder (16) that comprises means for securing to one of the structures, securing means passing sealingly through the other end of the cylinder (16) for connecting the other end piston (18) to the other structure, and a substantially non-viscous liquid filling the cylinder (16) and the ducts (58) of the pistons (18), this device constituting a low-pass filter as regards the vibratory forces applied to one of the structures.

11. A device according to any of claims 1 to 9, characterized in that it comprises a plurality of the aforementioned devices mounted in series between the structures to constitute a comb filter, each device being tuned to a different low frequency from that of the other devices.

FIG.1

FIG.3

FIG.2